(19) Europäisches Patentamt
European Patent Office
Office européen des brevets

(11) **EP 2 927 572 B1**

(12) **EUROPÄISCHE PATENTSCHRIFT**

(45) Veröffentlichungstag und Bekanntmachung des Hinweises auf die Patenterteilung:
**09.12.2020 Patentblatt 2020/50**

(51) Int Cl.:
**F21S 43/14** (2018.01)     **F21S 43/243** (2018.01)
**F21S 43/249** (2018.01)     **F21S 43/251** (2018.01)
**F21S 45/47** (2018.01)     **G02B 6/00** (2006.01)

(21) Anmeldenummer: **15162312.1**

(22) Anmeldetag: **02.04.2015**

(54) **KRAFTFAHRZEUGLEUCHTE MIT WISCHEFFEKT**

LIGHT FOR MOTOR VEHICLE COMPRISING A WIPE EFFECT

LAMPE DE VÉHICULE AUTOMOBILE AVEC EFFET D'ESSUYAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.04.2014 DE 102014206593**

(43) Veröffentlichungstag der Anmeldung:
**07.10.2015 Patentblatt 2015/41**

(73) Patentinhaber: **Automotive Lighting Reutlingen GmbH**
**72762 Reutlingen (DE)**

(72) Erfinder: **Brendle, Matthias**
**72074 Tübingen (DE)**

(74) Vertreter: **DREISS Patentanwälte PartG mbB**
**Friedrichstraße 6**
**70174 Stuttgart (DE)**

(56) Entgegenhaltungen:
EP-A1- 1 895 228     EP-A1- 2 463 154
EP-A1- 2 530 372     WO-A1-2015/002013
WO-A2-2013/120124     DE-A1-102013 204 021
US-A- 4 929 866     US-A- 5 590 945
US-A1- 2008 013 333     US-A1- 2011 085 344

## Beschreibung

Die vorliegende Erfindung betrifft einen Lichtleiter für eine Kraftfahrzeugbeleuchtungseinrichtung nach dem Oberbegriff des Anspruchs 1.

Ein solcher Lichtleiter ist aus der EP 1 895 228 A1 bekannt. Die US 5,590,945 zeigt einen plattenförmigen Lichtleiter, der einen schmalen Lichtstreifen erzeugen soll, der zur Hervorhebung von Komponenten in Armaturenbrettern oder Konsolen oder in Konsumer- oder Industrie-Elektronikausrüstung dient. Licht von einer oder zwei Lichtquellen, die an einem seitlichen Ende des plattenförmigen Lichtleiters angeordnet sind, wird an einer Rückseite des Lichtleiters zur länglich schmalen Lichtaustrittsseite des Lichtleiters umgelenkt und tritt dort aus.

In letzter Zeit werden von den Kraftfahrzeugherstellern zunehmend Fahrzeugleuchten nachgefragt, deren Erscheinungsbild dynamisch veränderbar ist. Unter einer Leuchte wird dabei eine Beleuchtungseinrichtung verstanden, die eine Signallichtfunktion erfüllt. Beispiele solcher Signallichtfunktionen sind Tagfahrlichtfunktionen, Blinklichtfunktionen, Bremslicht- und Schlusslichtfunktionen, ohne dass diese Aufzählung einen Anspruch auf Vollständigkeit erhebt. Unter der Erfüllung einer Lichtfunktion wird hier das Erzeugen einer regelkonformen Lichtverteilung im räumlichen Vorfeld der Beleuchtungseinrichtung verstanden. Von einer solchen Lichtverteilung begrifflich zu unterscheiden ist das Erscheinungsbild, das die Beleuchtungseinrichtung einem Betrachter bietet, der sich im Vorfeld der Beleuchtungseinrichtung befindet und diese betrachtet.

Während im Normalbetrieb, in dem die Beleuchtungseinrichtung ihre regelkonforme Lichtverteilung erzeugt, zum Beispiel ein homogen helles Erscheinungsbild der Leuchtenfläche erwünscht ist, soll zum Beispiel beim Aufschließen oder Abschließen des Fahrzeugs ein heller Lichtfleck über die leuchtende Fläche wischen. Ein solcher Effekt ist ein Beispiel für die oben genannte dynamische Veränderbarkeit des Erscheinungsbildes.

Ein anderes Beispiel ergibt sich bei Blinklichtfunktionen, bei denen die Bewegungsrichtung eines solchen Lichtfleckes die Richtungsanzeige die Signalwirkung des Blinklichts verstärkt, was zu einem Sicherheitsgewinn führt.

Zur Erzielung solcher Wischeffekte ist es bekannt, viele Lichtquellen räumlich hinter einer Lichtaustrittsfläche zu verteilen und diese Lichtquellen nach Art eines Lauflichtes einzeln so anzusteuern, dass sich in Abhängigkeit von der zum Beispiel mit variabler Dimmung erfolgenden Ansteuerung eine wischende Bewegung eines Lichtfleckes ergibt. Eine solche Beleuchtungseinrichtung stellt ein Beispiel der oben genannten, per se bekannten Beleuchtungseinrichtung dar. In einer Verallgemeinerung lässt sich das so ausdrücken, dass sich auf diese Weise zeitlich und räumlich unterschiedliche Leuchtdichten verwirklichen lassen. Bei im Raum gekrümmten Lichtaustrittsflächen erfordert die räumliche Positionierung der vielen Lichtquellen und der im Regelfall zusätzlich erforderlichen lichtbündelnden Optikelemente sowie die elektrische Kontaktierung dieser Lichtquellen über große flexible Leiterplatten einen erheblichen, die Kosten in die Höhe treibenden Aufwand.

Um die Kosten zu begrenzen hat man zunächst die Anzahl der unabhängig ansteuerbaren Lichtaustrittsflächen stark reduziert. Teilweise werden nur noch drei einzeln ansteuerbare Leuchtenflächen gefordert. Dies hat die Ansteuerung stark vereinfacht. Um mit nur drei Lichtquellen auch komplexe Leuchtenfiguren realisieren zu können, verwendet man zunehmend Lichtleiter. Dabei wird beispielsweise ein herkömmlicher Lichtleiter mit mehreren Einkoppelstellen ausgestattet, so dass über jede Einkopplung eine bestimmte Strecke des Lichtleiters ausgeleuchtet werden kann. Es handelt sich also im Grunde um mehrere Lichtleiter mit eigener Lichtquelle und Einkopplung, die in ein Formteil integriert werden, sich optisch aber nur wenig gegenseitig beeinflussen. Leider zeigen diese Lösungen kein homogenes Erscheinungsbild. Vor allem die Verzweigungsstellen am Lichtleiter sind extrem inhomogen. Auch zeigt diese Lösung die bekannt schlechten Wirkungsgrade üblicher Lichtleiterlösungen. Ebenso ein Nachteil ist, dass die LED-Positionen über die ganze Lichtleiterlänge verteilt sind, so dass keine zentrale Lichtquelle für die Lichteinspeisung verwendet werden kann, sondern mehrere separate Lichtquellen mit eigener Befestigung, Kühlung und elektrischer Zuleitung benötigt werden.

Vor diesem Hintergrund besteht die Aufgabe der Erfindung darin, einen Lichtleiter der eingangs genannten Art anzugeben, mit dem sich einerseits ein homogenes Erscheinungsbild und andererseits die genannten wischenden Lichteffekte mit einem geringeren Aufwand und damit insbesondere geringeren Kosten verwirklichen lassen.

Diese Aufgabe wird mit den Merkmalen des Anspruchs 1 gelöst.

Von dem eingangs genannten Stand der Technik unterscheidet sich der erfindungsgemäße Lichtleiter durch die kennzeichnenden Merkmale des Anspruchs 1. Er weist zwei einander gegenüberliegende und zwischen der Lichtaustrittsfläche und der Umlenkfläche liegende Transportflächen sowie ein sowohl an die Lichtaustrittsfläche und die Umlenkfläche als auch an beide Transportflächen anstoßendes erstes Ende auf. Das erste Ende weist mehrere als Kollimatoren ausgestaltete Einkoppelzweige auf, und die Lichteintrittsflächen des Lichtleiters sind Einkoppelflächen von den Einkoppelzweigen. Das von den Lichtquellen ausgehende Licht tritt durch die Einkoppelflächen der Kollimatoren bzw. der Einkoppelzweige in den Lichtleiter ein und wird unter flachem Winkel auf Kollimatorflächen gelenkt, an denen die Strahlen umlenkend reflektiert werden. Dabei gelangt das Licht von dort auf Sektoren der Umlenkfläche, wo das Licht durch Reflexion zu nebeneinander liegenden Zonen der Lichtaustrittsfläche umgelenkt wird.

Ein Lichtleiter, der eine einzige Lichteintrittsfläche, eine zugehörige einzige Umlenkfläche und eine zugehörige einzige Lichtaustrittsfläche aufweist, ist aus der DE 10 2011 018 508 bekannt.

Der erfindungsgemäße Lichtleiter erlaubt eine Erzeugung mehrerer, in ihrer Intensität individuell steuerbarer Lichtbündel, von denen jedes über eine im Strahlengang des Bündels angeordnete Lichteintrittsfläche in den Lichtleiter eingekoppelt wird und eine Zone der Lichtaustrittsfläche beleuchtet. Durch eine zeitlich versetzte Aufsteuerung und Absteuerung der Lichtströme in den einzelnen Lichtbündeln lässt sich das erwünschte Wischen verwirklichen. Durch Einstellen konstanter Lichtströme lässt sich ein homogenes Erscheinungsbild einstellen.

Dadurch, dass der Lichtleiter eine der Lichtaustrittsfläche gegenüberliegende Umlenkfläche besitzt, kann auf die Umlenkfläche einfallendes Licht gezielt so steil auf die Lichtaustrittsfläche umgelenkt werden, dass dieses Licht dort keine interne Totalreflektion erfährt, sondern aus dem Lichtleiter austritt.

Dadurch, dass die Umlenkfläche einen ersten Sektor und einen zweiten Sektor aufweist, und dass der Lichtleiter dazu eingerichtet ist, über die erste Lichteintrittsfläche eingekoppeltes Licht auf den ersten Sektor zu richten, wobei der erste Sektor dazu eingerichtet ist, das auf ihn gerichtete Licht auf die erste Zone zu richten, wobei der zweite Sektor dazu eingerichtet ist, das auf ihn gerichtete Licht auf die zweite Zone zu richten, und wobei der erste Sektor nicht mit dem zweiten Sektor identisch ist, kann die aus dem Inneren des Lichtleiters heraus erfolgende Beleuchtung der Zonen und damit auch deren Erscheinungsbild, wie es sich einem außen stehenden Betrachter bietet, durch eine individuelle Steuerung der Lichtbündel, die über die Lichteintrittsflächen eingekoppelt werden, gesteuert werden.

Das Vorhandensein der Umlenkflächen hat den weiteren Vorteil, dass sich eine größere Gestaltungsfreiheit für die Anordnung der Lichteintrittsflächen ergibt als in Fällen, in denen eine Umlenkfläche nicht vorhanden ist. Dadurch können die Lichteintrittsflächen zum Beispiel an einer Seite oder einem seitlichen Ende des Lichtleiters angeordnet sein. Die Lichtquellen, welche die einzukoppelnden Lichtbündel erzeugen, können zum Beispiel Halbleiterlichtquellen sein, die auf einem (kostengünstigen) ebenen Schaltungsträger angeordnet sind, ohne dass diese spezielle Anordnung die Gestaltungsfreiheit des Erscheinungsbildes des Lichtleiters stark beschränken würde.

Im Ergebnis wird jede Zone der Lichtaustrittsfläche von einer Lichteintrittsfläche her mit einem Lichtbündel beleuchtet. Dabei soll nicht ausgeschlossen sein, dass Licht eines Lichtbündels auch auf andere Zonen der Lichtaustrittsfläche fallen kann, solange der Großteil des Lichtes des Lichtbündels auf eine einzige Zone konzentriert wird, welche insofern durch dieses Lichtbündel bevorzugt beleuchtet wird.

Ferner ist bevorzugt, dass die Umlenkfläche durch eingeformte Auskoppelelemente wie Prismen dazu eingerichtet ist, das auf einen bestimmten Sektor konzentrierte Licht bevorzugt auf genau eine durch den Strahlengang zugeordnete Zone der Lichtaustrittsfläche zu konzentrieren.

Bevorzugt ist auch, dass die Lichtaustrittsfläche in Facetten unterteilt ist, von denen bevorzugt mehrere in eine Zone der Lichtaustrittsfläche liegen.

Ferner ist bevorzugt, dass die Facetten im Meridionalschnitt leicht konvex oder konkav ausgeführt sind, um die für eine regelkonforme Lichtverteilung erforderliche Streubreite zusammen mit einem homogenen Erscheinungsbild der Lichtaustrittsfläche zu gewährleisten.

Bevorzugt ist auch, dass die einzelnen Facetten bevorzugt gestuft so angeordnet sind, dass sich unabhängig von der Pfeilung der Einhüllenden der Lichtaustrittsfläche eine erwünschte Abstrahlrichtung ergibt.

Eine weitere bevorzugte Ausgestaltung zeichnet sich dadurch aus, dass die Facetten im Sagittalschnitt als konvexe Sattelfläche oder konkave Torusfläche ausgeführt sind.

Bevorzugt ist auch, dass die Umlenkprismen so ausgestaltet und angeordnet sind, dass sie das einfallende Licht so umlenken, dass das umgelenkte Licht die Lichtaustrittsfläche in einem Normalbetrieb, in dem keine wischenden Lichteffekte erzeugt werden, homogen beleuchtet.

Dazu können sie, je nach Bedarf, konvex- oder konkavzylindrisch gewölbt sein. Die Zylinderachsen stehen in diesem Fall senkrecht auf der Meridionalfläche.

Ferner ist bevorzugt, dass die Umlenkprismen insbesondere so ausgestaltet und angeordnet sind, dass jeder Sektor der Umlenkflächen die von ihm bevorzugt beleuchtete Zone der Lichtaustrittsfläche homogen beleuchtet.

Bevorzugt ist auch, dass die Lichteinkoppelzweige in einer Sagittalfläche gebogen sind.

Ferner ist bevorzugt, dass die Meridionalfläche der Einkoppelzweige eben und nicht gekrümmt ist und in eine zumindest im Übergangsbereich in der gleichen Meridionalfläche liegenden Rest des Lichtleiters übergeht.

Bevorzugt ist auch, dass sich der Einkoppelzweig im Meridionalschnitt mit zunehmender Entfernung von der Lichteintrittsfläche monoton zunehmend aufweitet.

Eine weitere bevorzugte Ausgestaltung zeichnet sich dadurch aus, dass die Einkoppelzweige eine gebogene Form aufweisen, wobei die Biegung bevorzugt in der Sagittalebene verläuft. Die gebogenen Einkoppelzweige enden bevorzugt in einer Ebene (wobei die Lichteinkoppelflächen nicht eben sein müssen und/oder leicht verkippt zu der Ebene liegen können).

Es versteht sich, dass die vorstehend genannten und die nachstehend noch zu erläuternden Merkmale nicht nur in der jeweils angegebenen Kombination, sondern auch in anderen Kombinationen oder in Alleinstellung anwendbar sind, ohne den Rahmen der vorliegenden Erfindung zu verlassen.

Ausführungsbeispiele der Erfindung sind in den Zeichnungen dargestellt und werden in der nachfolgenden Beschreibung näher erläutert. Dabei bezeichnen gleiche Bezugszeichen in den verschiedenen Figuren jeweils gleiche oder zumindest ihrer Funktion nach gleiche Elemente.

Es zeigen, jeweils in schematischer Form:

Figur 1    ein Lichtleitervolumen zur Verdeutlichung von Begriffen, die in der Beschreibung verwendet werden;

Figur 2    eine Draufsicht auf eine aufgeschnittene Beleuchtungseinrichtung mit einem ersten Ausführungsbeispiel eines erfindungsgemäßen Lichtleiters;

Figur 3    einen Teilquerschnitt des Lichtleiters aus der Figur 2;

Figur 4    ein Detail der Lichtaustrittsfläche aus Figur 3;

Figur 5    eine Ausgestaltung eines Details Y der Umlenkfläche aus der Figur 2;

Figur 6    eine alternative Ausgestaltung des Details Y;

Figur 7    ein zweites Ausführungsbeispiel eines erfindungsgemäßen Lichtleiters mit einer dem Betrachter zugewandten Lichtaustrittsfläche;

Figur 8    den Lichtleiter aus der Figur 7 in einer Draufsicht;

Figur 9    den Lichtleiter aus der Figur 7 in einer perspektivischen Ansicht;

Figur 10    ein drittes Ausführungsbeispiel eines erfindungsgemäßen Lichtleiters in einer perspektivischen Ansicht;

Figur 11    den Lichtleiter aus der Figur 10 mit einer dem Betrachter zugewandten Lichtaustrittsfläche;

Figur 12    den Lichtleiter aus der Figur 10 in einer Draufsicht;

Figur 13    ein Detail U eines Einkoppelzweiges des dritten Ausführungsbeispiels eines Lichtleiters im Meridionalschnitt;

Figur 14    einen Sagittalschnitt des Details U eines Einkoppelzweiges des dritten Ausführungsbeispiels eines Lichtleiters;

Figur 15    ein viertes Ausführungsbeispiel eines erfindungsgemäßen Lichtleiters mit einer dem Betrachter zugewandten Lichtaustrittsfläche;

Figur 16    den Lichtleiter aus der Figur 13 in einer Draufsicht;

Figur 17    den Lichtleiter aus der Figur 13 in einer perspektivischen Ansicht;;

Figur 18    eine vergrößerte Darstellung der Lichteinkoppelzweige des vierten Ausführungsbeispiels;

Figur 19    die Figur 19 das Erscheinungsbild der Lichtaustrittsfläche eines fünften Ausführungsbeispiels; und

Figur 20    den Lichtleiter aus der Figur 19 in einer perspektivischen Ansicht.;

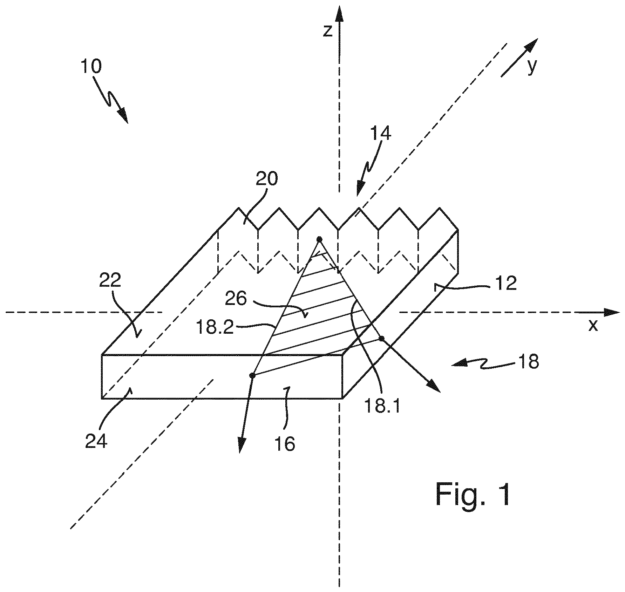

Im Einzelnen zeigt die Figur 1 einen plattenförmigen Lichtleiter 10, der insbesondere ein erstes Ende 12, ein für den Betrachter der Figur 1 rückwärtiges zweites Ende 14 und ein dem Betrachter der Figur 1 zugewandtes drittes Ende 16 aufweist. Das erste Ende 12 dient zur Einkopplung von Licht, von dem hier stellvertretend ein einzelner Lichtstrahl 18 dargestellt ist. Das zweite Ende 14 weist Auskoppelelemente auf, die hier als Prismen 20 verwirklicht sind und die einfallendes Licht 18, von dem hier stellvertretend ein einzelner Lichtstrahl dargestellt ist, zum dritten Ende 16 hin so umlenken, dass dieses Licht dort aus dem Lichtleiter 10 austritt. Das zur Einkopplung von Licht eingerichtete erste Ende 12 weist bevorzugt lichtbündelnde Teilflächen auf. Die Prismen 20 der Lichtumlenkfläche am zweiten Ende und die bündelnden Teilflächen der Lichteinkoppelbereiche sind bevorzugt zylindrische Flächen, welche durch Extrusion einer Kurve entlang einer Achse erzeugt werden. Diese Achse wird als Zylinderachse bezeichnet.

Der Lichtleiter weist ferner Transportflächen 22 und 24 auf, die das zwischen den Enden 12, 14 und 16 liegende Lichtleitervolumen in weiteren Raumrichtungen begrenzen. Die hier vorliegende Plattenform des Lichtleiters ergibt sich dadurch, dass die Länge und Breite der Transportflächen gegenüber der Dicke des Lichtleitervolumens, die dem Abstand der Transportflächen voneinander entspricht, vergleichsweise groß ist. Auf seinem Weg vom ersten Ende 12 zum zweiten Ende 14 und weiter zum dritten Ende 16 kann das Licht 18 eine oder mehrere interne Totalreflexionen an den Transportflächen 22, 24 erfahren, bei denen das Licht jeweils in das Innere des Lichtleiters zurückreflektiert wird, so dass es im Lichtleiter weitertransportiert wird.

Der Lichtleiter lässt sich gedanklich und unabhängig von seiner tatsächlichen Form, die im Raum gekrümmt verlaufen kann, immer auf eine ebene Plattenform abwickeln. Der Lichtleiter 10 aus der Figur 1 kann als ein solcher, auf eine Ebene abgewickelter Lichtleiter betrachtet werden. Die Meridionalfläche ist dadurch charakterisiert, dass sie parallel und äquidistant zu den parallelen Transportflächen und damit innerhalb des Lichtleiters verläuft. Die Meridionalfläche ist auch Bestandteil jedes einzelnen Lichteinkoppelbereichs, wobei die Achsen der zylindrischen Lichtbündelungsflächen senkrecht auf der Meridionalebnene stehen. Die Lichteintrittsfläche liegt zwischen den beiden Transportflächen und steht senkrecht auf diesen. Die Meridionalfläche weist folgende Eigenschaften auf: Die Fläche verläuft parallel zu den Transportflächen und liegt in der Mitte zwischen diesen. In der endgültigen räumlichen Form des Lichtleiters stellt die Meridionalfläche die neutrale Fläche dar. Unter einer neutralen Flächen wird so etwas wie eine Verallgemeinerung einer neutralen Faser verstanden. Die neutrale Faser erfährt beim Krümmen keine Längenänderung.

Die neutrale Fläche soll in diesem Sinne eine Fläche sein, die beim gedanklichen Verbiegen eines plattenförmigen Lichtleiters in eine im Raum gekrümmte Form möglichst keine Änderung ihres Flächeninhaltes erfährt. Bevorzugt liegen die geometrischen Mittelpunkte der Lichtaustrittsflächen der Lichtquellen sowie die Normalen dieser Lichtaustrittsflächen in den genannten Mittelpunkten in der Meriodionalfläche, die gedanklich auch in den Außenraum fortgesetzt werden kann.

Wenn man vereinfachend annimmt, dass das Licht 18 ohne Reflexionen an den Transportflächen 22 und 24 direkt vom ersten Ende 12 zum zweiten Ende 14 und von dort zum dritten Ende 16 propagiert, ergeben sich im Lichtleitervolumen zwei Wegabschnitte 18.1 und 18.2, die in **einer Fläche 26** liegen. Diese Fläche ist dann, wenn sie die übrigen Bedingungen wie insbesondere den äquidistanten Abstand zu beiden Transportflächen erfüllt, ein Beispiel einer Meridionalfläche. In dem gezeigten Beispiel kann man eine solche gedachte Fläche 26 durch die Angabe eines Lichteintrittspunktes des Lichtstrahls 18 am ersten Ende, durch die Angabe eines Reflexionspunktes des Lichtstrahls 18 am zweiten Ende und durch die Angabe eines Lichtaustrittspunkts am dritten Ende 16 definieren.

Die Definition erfasst auch gekrümmte Lichtleiterplatten mit im Raum gekrümmten Lichtleitern. Die Meridionalfläche liegt dann der Form des Lichtleiters folgend innerhalb des Lichtleiters äquidistant zwischen den Transportflächen. liegen soll. Eine solche gedachte Fläche 26 wird im Folgenden auch Meridionalschnitt bezeichnet. In dem Beispiel, das in der Figur 1 dargestellt ist, liegt der Meridionalschnitt 26 in der x-y-Ebene.

Ergänzend dazu wird im Folgenden unter einer Sagittalfläche oder einem Sagittalschnitt eine Fläche verstanden, die senkrecht zu dem Meridionalschnitt 26 liegt. Diese Definition wird von einer Vielzahl von Flächen erfüllt, die durch eine Drehung der Sagittalfläche erzeugt werden und die ebenfalls senkrecht auf dem Meridionalschnitt 26 stehen. In dem Beispiel, das in der Figur 1 dargestellt ist, liegen die Sagittalschnitte senkrecht zur x-y-Ebene mit einer zur z-Achse parallelen Drehachse.

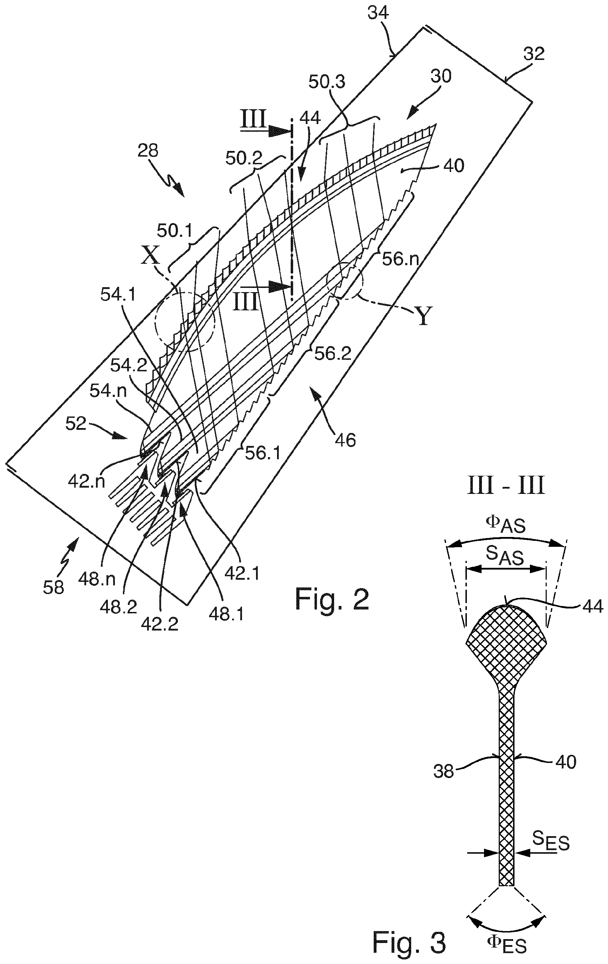

Die Figur 2 zeigt eine Beleuchtungseinrichtung 28 in einer Schnittansicht. Die Beleuchtungseinrichtung weist ein Ausführungsbeispiel eines erfindungsgemäßen Lichtleiters 30 auf. Der Lichtleiter 30 ist innerhalb eines Gehäuses 32 der Beleuchtungseinrichtung ortsfest zum Gehäuse befestigt. Eine Lichtaustrittsöffnung der Beleuchtungseinrichtung wird durch eine transparente Abdeckscheibe 34 abgedeckt.

Die Figur 3 zeigt einen Teilquerschnitt III-III des Lichtleiters 30 aus der Figur 2. Der Lichtleiter weist abgesehen von einer Querschnittserweiterung, die von seiner Lichtaustrittsfläche 44 begrenzt und auf eine Nachbarschaft zu der Lichtaustrittsfläche begrenzt ist, eine konstante Dicke $S_{ES}$ auf. Die konstante Dicke entspricht dem äquidistanten Abstand der beiden Transportflächen 38 und 40. Der Teilquerschnitt III-III, der in der Figur 3 dargestellt ist, ist ein Sagittalschnitt im Sinne der oben gegebenen Definition. Die Querschnittserweiterung erfolgt bevorzugt so, dass sich im Querschnitt die Form einer zylindersektorförmigen Linse ergibt, die das austretende Licht im Sagittalschnitt bündelt und an den Lichtleiter angeformt ist, beziehungsweise einen Bestandteil eines einstückigen Lichtleiters bildet. In einer alternativen Ausgestaltung sind die zylindersektorförmige Linse und der Rest des Lichtleiters 30 voneinander verschiedene Bauteile.

Der Lichtleiter weist also eine Querschnittserweiterung auf, die von seiner Lichtaustrittsfläche 44 begrenzt und auf eine Nachbarschaft zu der Lichtaustrittsfläche begrenzt ist, wobei die Querschnittserweiterung so beschaffen ist, dass sich im Querschnitt die Form einer zylindersektorförmigen Linse ergibt, die das austretende Licht im Sagittalschnitt bündelt. Die Linse ist entweder an den Lichtleiter angeformt, so dass sie einen Bestandteil eines einstückigen Lichtleiters bildet, oder die Linse und der Rest des Lichtleiters bilden die Bestandteile eines zweiteiligen aus dem Rest des Lichtleiters und der Linse zusammengesetzten Lichtleiters.

Die Zeichnungsebene der Figur 2 liegt parallel zu einem Meridionalschnitt im Sinne der oben gegebenen Definition. Dabei ist in der Figur 2 eine Transportfläche 40 dem Betrachter zugewandt und eine andere Transportfläche liegt verdeckt unterhalb der Zeichnungsebene. Der in der Figur 2 dargestellte Lichtleiter 30 weist mehrere Lichteintrittsflächen 42.1, 42.2, ..., 42.n auf, wobei hier n = 3 ist. Die Zahl der Lichteintrittsflächen kann auch von 3 abweichen und besitzt bevorzugt Werte von n = 2 bis n = 20. Der Lichtleiter 30 weist ferner eine Lichtaustrittsfläche 44 auf.

Der Lichtleiter 30 ist dazu eingerichtet, mit über eine bestimmte Lichteintrittsfläche 42.i eingekoppeltem Licht nur einen bestimmten Teil der Länge der Lichtaustrittsfläche 44 auszuleuchten. Dabei ist i = 1 oder 2 oder ein anderer Wert bis hin zum maximalen Wert n. In der Figur 3 wird dies dadurch verdeutlicht, dass ein von einer Lichtquelle 48.1 ausgehendes Lichtbündel 50.1 nur einen Teil der Lichtaustrittsfläche 44 beleuchtet, während ein von einer anderen Lichtquelle 48.2 ausgehendes Lichtbündel 50.2 nur einen anderen Teil der Lichtaustrittsfläche 44 beleuchtet und ein von einer weiteren Lichtquelle 48.1 ausgehendes weiteres Lichtbündel 50.1 nur einen weiteren Teil der Lichtaustrittsfläche 44 beleuchtet. Jeder bevorzugt von einer Lichtquelle beleuchteter Teil der Lichtaustrittsfläche wird im Folgenden auch als Zone bezeichnet. Der von dem Lichtbündel zunächst bevorzugt beleuchtete Teil der Umlenkfläche wird im Folgenden als Sektor bezeichnet.

Dabei können die von benachbarten Sektoren ausgehenden und benachbarte Zonen beleuchtenden Lichtbündel getrennt voneinander verlaufend aneinander angrenzen oder einander überlappen. Die Zonen können sich daher überschneiden.

Der Lichtleiter 30 weist eine der Lichtaustrittsfläche 44 gegenüberliegende Umlenkfläche 46 sowie zwei einander gegenüberliegende und zwischen der Lichtaustrittsfläche 44 und der Umlenkfläche 46 liegende Transportflächen 38, 40 sowie ein sowohl an die Lichtaustrittsfläche 44 und die Umlenkfläche 46 als auch an beide Transportflächen anstoßendes erstes Ende 52 auf. Das erste Ende 52 weist mehrere Einkoppelzweige 54.1, 54.2, 54.n auf, von denen jeder eine Lichteintrittsfläche 42.1, 42.2, 42.n aufweist und dazu eingerichtet ist, über seine Lichteintrittsfläche eingekoppeltes Licht auf genau einen Sektor 56.1, 56.2, 56.n der Umlenkfläche 46 zu konzentrieren. Die Umlenkfläche 46 ist durch eingeformte Auskoppelelemente wie Prismen dazu eingerichtet, das auf einen bestimmten Sektor 56.i konzentrierte Licht auf genau eine durch den Strahlengang zugeordnete Zone der Lichtaustrittsfläche 44 zu konzentrieren, so dass diese Zone zumindest den größten Teil des von dem Sektor ausgehenden Lichtes erhält.

Dabei ist bevorzugt, dass der Lichtleiter für jeden Einkoppelzweig genau einen von Sektoren anderer Einkoppelzweige verschiedenen Sektor der Umlenkfläche 46 und einen von Zonen anderer Einkoppelzweige verschiedene Zone der Lichtaustrittsfläche 44 aufweist. Insgesamt besitzt der Lichtleiter eine Keilform mit treppenförmig angeordneten Facetten zur Lichtauskopplung. Die Erfindung ist aber nicht auf Lichtleiter mit dieser Geometrie beschränkt. Der erfindungsgemäße Lichtleiter lässt sich zum Beispiel in der Sagittalebene so biegen, dass sich eine zylindermantelförmige Meridionalfläche mit einer ringförmigen Lichtaustrittsfläche oder eine Lichtaustrittsfläche in nahezu beliebig gekrümmter Streifenform ergibt. Lichtfunktionen, die bevorzugt mit dem erfindungsgemäßen Lichtleiter verwirklicht werden, weil sie sich für wischende Lichteffekte, beziehungsweise ein dynamisch veränderliches Erscheinungsbild eignen, sind das Tagfahrlicht, das Blinklicht und das Begrenzungslicht.

Dadurch, dass der Lichtleiter 30 zwei einander gegenüberliegende und zwischen der Lichtaustrittsfläche 44 und der Umlenkfläche 46 liegende Transportflächen 38, 40 aufweist, kann der Lichtleiter auf diese Transportflächen einfallendes Licht weiter in sein Inneres leiten, ohne es unerwünscht auszukoppeln. Eine Transportfläche ist dabei eine Seitenfläche des Lichtleiters, die mit der Hauptausbreitungsrichtung des Lichtes so kleine Winkel einschließt, dass an dieser Transportfläche im Wesentlichen interne Totalreflektionen auftreten.

Die beiden einander gegenüberliegenden Transportflächen bilden mit der Lichtaustrittsfläche und der Umlenkfläche eine zusammenhängende Mantelfläche eines Teils des Lichtleitervolumens.

Dadurch, dass der Lichtleiter ein erstes Ende 52 aufweist, das sowohl an die Lichtaustrittsfläche 44 und an die Umlenkfläche 46 als auch an beide Transportflächen 38, 40 anstößt und das mehrere Einkoppelzweige 54.i aufweist, kann die Lichteinkopplung über dieses erste Ende erfolgen und damit insbesondere auf ein solches Ende 52 konzentriert werden. Es ist insbesondere nicht erforderlich, die für die Lichteinkopplung erforderlichen Lichtquellen 48.i über die sich an das erste Ende 52 des Lichtleiters 30 anschließende Länge des Lichtleiters zu verteilen. Dies vergrößert die Gestaltungsfreiheit für den Entwurf des Lichtleiters und erlaubt eine Konzentration der für die Energieversorgung, Ansteuerung und Kühlung der Lichtquellen erforderlichen Technik wie Leiterplatte und Kühlkörper 58 auf einen kleinen Raumbereich, was vielfältige Vorteile in Bezug auf die Kosten mit sich bringt.

Dadurch, dass jeder Einkoppelzweig 54.i eine Lichteintrittsfläche 42.i aufweist, ist eine Einkoppelzweigindividuelle Lichteinkopplung möglich, in der eine Lichtquelle 48.i in Bezug auf die Lichteintrittsfläche so angeordnet werden kann, dass von ihr ausgehendes Licht über die Lichteintrittsfläche in den Einkoppelzweig eintritt.

Dadurch, dass jeder Einkoppelzweig 54.i dazu eingerichtet ist, über seine Lichteintrittsfläche 42.i eingekoppeltes Licht auf genau einen Sektor 56.i der Umlenkfläche 46 zu konzentrieren und dieser Sektor dazu eingerichtet ist, das auf ihn konzentrierte Licht auf genau eine Zone der Lichtaustrittsfläche 44 zu konzentrieren, kann die Menge des über diese Zone austretenden Lichtes durch eine entsprechende Steuerung der zugeordneten Lichtquelle 48.1 gesteuert werden.

Dadurch, dass der Lichtleiter 30 für jeden Einkoppelzweig 54.i genau einen von Sektoren 56.i der Umlenkfläche 46 anderer Einkoppelzweige verschiedenen Sektor und eine von Zonen der Lichtaustrittsfläche anderer Einkoppelzweige verschiedene Zone der Lichtaustrittsfläche 44 aufweist, ergibt sich eine umkehrbar-eindeutige Zuordnung zwischen je einem Einkoppelzweig und je einer Zone der Lichtaustrittsfläche 44 sowohl für jeden Einkoppelzweig als auch für jede Zone. Im Ergebnis lässt sich damit die über jede Zone der Lichtaustrittsfläche austretende Lichtmenge genau durch eine entsprechende Steuerung der in den jeweils zugehörigen Einkoppelzweig eingekoppelten Lichtmenge steuern.

Die Erfindung ermöglicht es, in dem Lichtleiter mehrere Lichtbündel zu erzeugen, von denen jedes einen unterschiedlichen Teilbereich der Lichtaustrittsfläche des Lichtleiters ausleuchtet.

Die Figuren 2 und 3 zeigen einen Lichtleiter 30 für eine Kraftfahrzeugbeleuchtungseinrichtung 28, welcher Lichtleiter 30 wenigstens zwei Lichteintrittsflächen 42.i und eine Lichtaustrittsfläche 44 aufweist und dazu eingerichtet ist, mit über eine erste der wenigstens zwei Lichteintrittsflächen 42.i eingekoppeltem Licht 50.1 eine erste Zone der Lichtaustrittsfläche zu beleuchten und mit über eine zweite der wenigstens zwei Lichteintrittsflächen eingekoppeltem Licht eine zweite, nicht mit der ersten Zone identische zweite Zone der Lichtaustrittsfläche zu beleuchten. Der Lichtleiter 30 weist eine der Lichtaustrittsfläche 44 gegenüberliegende Umlenkfläche 46 auf, die einen ersten Sektor 56.1 und einen zweiten Sektor 56.2 aufweist, und ist dazu eingerichtet, über die erste Lichteintrittsfläche 42.1 eingekoppeltes Licht auf den ersten Sektor 56.1 zu richten. Der erste Sektor ist dazu eingerichtet, das auf ihn gerichtete Licht auf die erste Zone zu richten. Der zweite Sektor ist dazu eingerichtet ist, das auf ihn gerichtete Licht auf die zweite Zone zu richten. Der erste Sektor ist nicht mit dem zweiten Sektor identisch.

Bei dem in der Figur 2 dargestellten Ausführungsbeispiel erfolgt die Einkopplung von Licht über drei als Kollimatoren ausgestaltete Einkoppelzweige, von denen jeder einen Sektor der Umlenkfläche ausleuchtet. Die Kollimatoren weisen bevorzugt eine ungefähr parabelförmige Grenzfläche auf, die der zugehörigen Lichteintrittsfläche gegenüberliegt. Die zugehörige Lichtquelle ist bevorzugt im Brennpunkt des Kollimators angeordnet, so dass der Kollimator den zugehörigen Sektor mit parallelem Licht beleuchtet.

Im Meridionalschnitt, der in der Figur 2 dargestellt ist, liegen sehr geordnete Strahlengänge vor. Im dazu senkrechten Sagittalschnitt III-III, der in der Figur 3 dargestellt ist, wird das Licht über die weitgehend äquidistanten Transportflächen des Lichtleiters, der also weitgehend eine konstante Dicke oder Wandstärke besitzt, mit einfacher oder mehrfacher interner Totalreflexion weitergeleitet. Das von der Lichtquelle ausgehende Lichtbündel wird dann auf die zugehörige Zone der Lichtaustrittsfläche gebündelt. Der Öffnungswinkel $\Phi_{AS}$ des aus der Zone austretenden Lichtbündels kann gegenüber dem Öffnungswinkel $\Phi_{ES}$ des eintretenden Lichtbündels entsprechend dem Öffnungsverhältnis $V = S_{ES}/S_{AS}$ reduziert werden. $S_{ES}$ ist dabei die Lichtleiterdicke außerhalb der in der Nachbarschaft zur Lichtaustrittsfläche 44 liegenden Querschnittserweiterung, und $S_{AS}$ ist dabei die maximale Lichtleiterdicke, die im Bereich der Querschnittserweiterung auftritt.

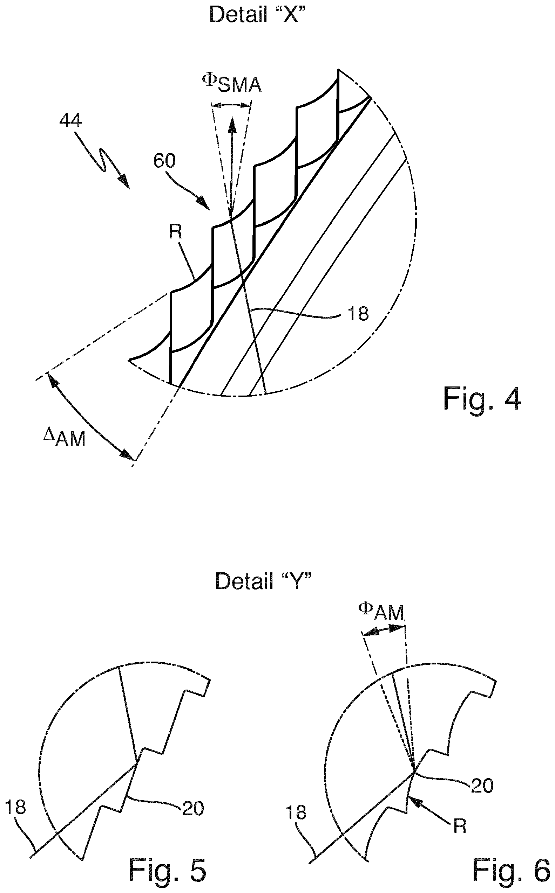

Die Figur 4 zeigt ein Detail X der Lichtaustrittsfläche 44 aus der Figur 3. Die Lichtaustrittsfläche 44 weist bevorzugt Konturen auf, welche das austretende Licht in einer gewünschten Weise umformen und welche dazu beitragen, das vom zugehörigen Sektor der Umlenkfläche her einfallende Licht aus der Zone der Lichtaustrittsfläche austreten zu lassen und eine dort unerwünschte interne Totalreflexion zu vermeiden. Eine Umformung erfolgt zum Beispiel mit dem Ziel, eine regelkonforme Lichtverteilung zu erzeugen, die eine horizontale Breite von +/- 20° und eine vertikale Breite von +/- 10° hat.

Dazu ist die Lichtaustrittsfläche 44 in Facetten 60 unterteilt, von denen bevorzugt mehrere in eine Zone der Lichtaustrittsfläche liegen. Die Facetten sind also insbesondere bevorzugt kleiner als die Zonen. Die Facetten sind bevorzugt im Meridionalschnitt leicht konvex oder konkav ausgeführt, um die für eine regelkonforme Lichtverteilung erforderliche Streubreite zusammen mit einem homogenen Erscheinungsbild der Lichtaustrittsfläche zu gewährleisten. Im Beispiel, das in der Figur 4 abgebildet ist, sind die Facetten leicht konkav mit einer kreisbogenförmigen Kontur mit Radius R ausgestaltet. Ein einfallendes, strahlförmig enges Lichtbündel 18 wird dadurch auf einen Öffnungswinkel $\Phi_{SMA}$ aufgeweitet.

Die Darstellung zeigt die Draufsicht auf die Kanten der gekrümmten Facetten.

Die genannten Konturen der Facetten können konkav oder konvex gekrümmt verlaufen, um den Öffnungswinkel des austretenden Lichtes zusätzlich beeinflussen zu können. Eine Ausgestaltung der Facetten mit Konturen aus der Figur 4 und aus der Figur 3 ergibt zum Beispiel sattelförmige Facetten auf der Lichtaustrittsfläche, die beim Lichtaustritt in der Meridionalebene eher strahlaufweitend und in dazu senkrechten Sagittalebenen eher strahlbündelnd wirken. Die einzelnen Facetten werden bevorzugt gestuft so angeordnet, dass sich unabhängig von der Pfeilung der Einhüllenden der Lichtaustrittsfläche eine erwünschte Abstrahlrichtung ergibt. Der Winkel $A_{AM}$ stellt den Winkel zwischen der ungestuften und der gestuften Lichtaustrittsfläche dar. Die Facetten können darüber hinaus im Sagittalschnitt konvex oder konkav ausgeführt sein, um durch eine daraus resultierende Strahlformung die notwendige Breite der Lichtverteilung zu erreichen und ein homogenes Erscheinungsbild der Lichtaustrittsfläche zu gewährleisten. Bei im Meridionalschnitt konkaver Kontur ergibt sich in dem einen Beispiel eine sattelförmige Facettenfläche, und in dem anderen Beispiel ergibt sich eine torusförmige Facettenfläche.

Die Figur 5 zeigt eine Ausgestaltung eines Details Y der Umlenkfläche 46 aus der Figur 2 mit geradlinig begrenzten Prismen 20 dargestellt, die ein einfallendes strahlförmig enges Lichtbündel 18 umlenken, ohne es dabei aufzuweiten.

Die Figur 6 zeigt konkav (von außen betrachtet) begrenzte Prismen, die eine kreisbogenförmige Kontur mit Radius R aufweisen. Ein einfallendes, strahlförmig enges Lichtbündel 18 wird dadurch auf einen Öffnungswinkel $\Phi_{AM}$ aufgeweitet. Die Prismen können auch konvexe Konturen aufweisen. Bevorzugt ist, dass die Konturen so gekrümmt sind, dass die Öffnungswinkel der einfallenden, kollimierten Lichtbündel 18 einander angeglichen werden oder so vergrößert und/oder verkleinert werden, dass letztlich die verschiedenen Zonen der Lichtaustrittsfläche homogen hell beleuchtet werden, wenn die Eintrittsflächen mit untereinander gleichen Lichtströmen gespeist werden. Wie bereits erwähnt, ist dies zum Beispiel dann nicht der Fall, wenn gezielt ein wischender Lichteffekt erzeugt werden soll.

Mit anderen Worten: Die Umlenkprismen sind bevorzugt so ausgestaltet und angeordnet, dass sie das einfallende Licht so umlenken, dass das umgelenkte Licht die Lichtaustrittsfläche in einem Normalbetrieb, in dem keine wischenden Lichteffekte erzeugt werden, homogen beleuchtet. Dazu können sie, je nach Bedarf, konvex- oder konkavzylindrisch gewölbt sein. Die Zylinderachsen stehen in diesem Fall senkrecht auf der Meridionalfläche.

Die Umlenkprismen sind bevorzugt insbesondere so ausgestaltet und angeordnet, dass jeder Sektor der Umlenkflächen die von ihm bevorzugt beleuchtete Zone der Lichtaustrittsfläche homogen beleuchtet.

Alternativ dazu sieht eine weitere Ausgestaltung vor, dass sich eine homogene Beleuchtung der Lichtaustrittsfläche bei sich in der Lichtaustrittsfläche überlappenden Lichtbündeln ergibt. Dies ist zum Beispiel dann der Fall, wenn die Lichtintensität im Zentrum einer Zone allein von dem diese Zone bevorzugt beleuchtenden Sektor der Umlenkfläche beleuchtet wird und die Grenze zwischen zwei einander benachbarten Zonen je zur Hälfte von einander benachbarten Sektoren der Umlenkfläche beleuchtet wird.

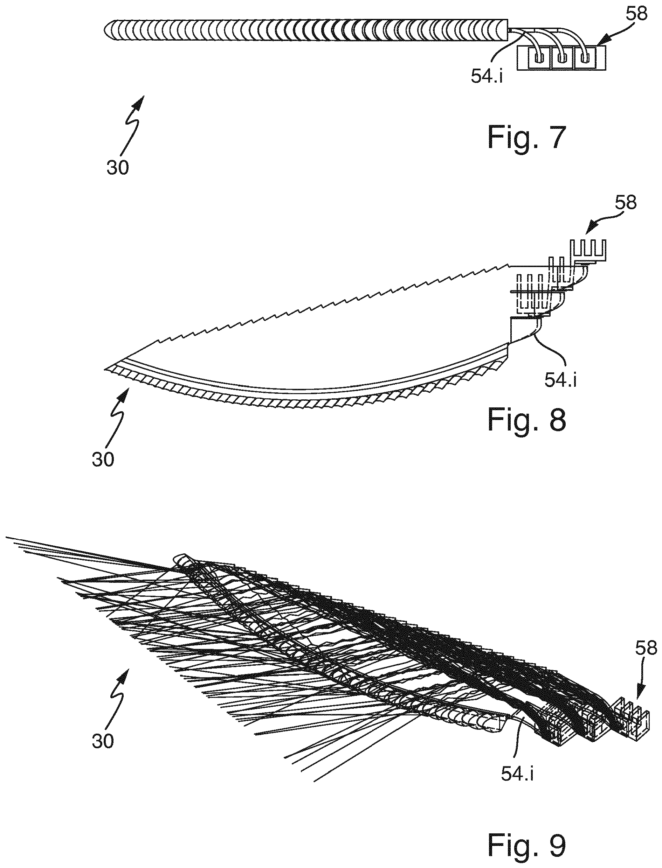

Die Figur 7 zeigt ein zweites Ausführungsbeispiel eines erfindungsgemäßen Lichtleiters mit einer dem Betrachter zugewandten Lichtaustrittsfläche. Der Lichtleiter 30 aus der Figur unterscheidet sich von dem ersten Ausführungsbeispiel dadurch, dass die Kollimatoren, also die Lichteinkoppelzweige 54.i in einer Sagittalfläche gebogen sind. Durch das Biegen der Kollimatoren ergeben sich weitere Freiheitsgrade bei der Platzierung der Lichtquellen und der Kühlkörper.

Die Figur 8 zeigt den Lichtleiter aus der Figur 7 in einer Draufsicht auf eine Meridionalfläche. Die Figur 8 zeigt, dass die Rippen der Kühlkörper 58 dort in eine andere Richtung zeigen als bei dem ersten Ausführungsbeispiel. Die Figur 9, die den Lichtleiter aus der Figur 7 in einer perspektivischen Ansicht zeigt, verdeutlicht ebenfalls die veränderte Anordnung der Lichtquellen und Kühlkörper. Diese veränderte Anordnung benötigt in der Längsrichtung des Lichtleiters weniger Bauraum als das erste Ausführungsbeispiel.

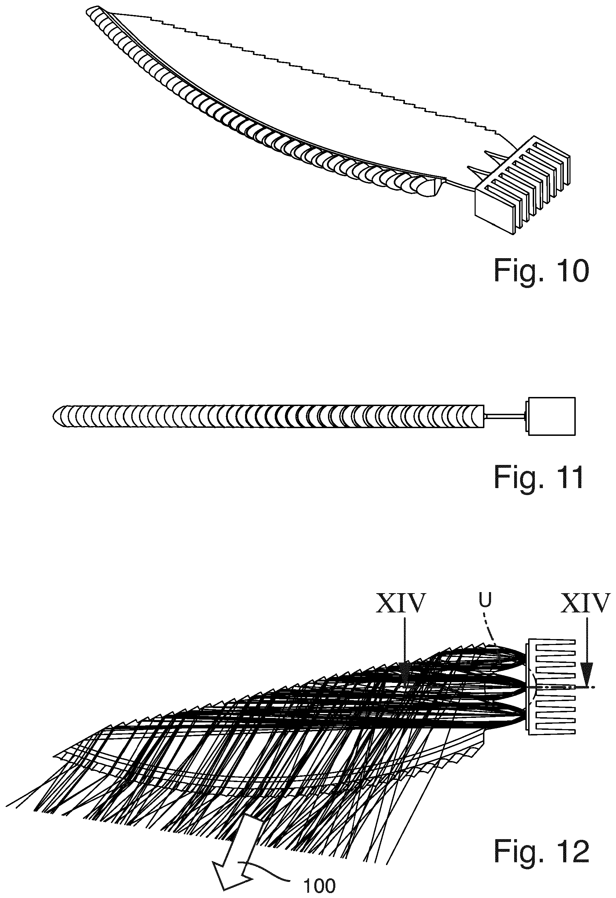

Die Figur 10 zeigt ein drittes Ausführungsbeispiel eines erfindungsgemäßen Lichtleiters 30 n einer perspektivischen Ansicht. Die Figur 11 zeigt den Lichtleiter aus der Figur 10 mit einer dem Betrachter zugewandten Lichtaustrittsfläche, und die Figur 12 zeigt den Lichtleiter aus der Figur 10 in einer Draufsicht.

Der Lichtleiter 30 des dritten Ausführungsbeispiels unterscheidet sich durch die Gestalt seiner Einkoppelzweige von dem ersten Ausführungsbeispiel und dem zweiten Ausführungsbeispiel. Beim dritten Ausführungsbeispiel liegen die Einkoppelzweige in einer Ebene so, dass zumindest der Strahlengang eines zentralen Hauptstrahls des jeweils in einem von ihnen propagierenden Lichtes nicht abgeknickt wird. Beim dritten Ausführungsbeispiel ergibt sich dies dadurch, dass die Meridionalfläche der Einkoppelzweige eben und nicht gekrümmt ist und in eine zumindest im Übergangsbereich in der gleichen Meridionalebene liegenden Rest des Lichtleiters übergeht.

Ein großer Vorteil dieser Ausgestaltung liegt darin, dass sämtliche Lichtquellen nebeneinander auf einer ebenen, starren Leiterplatte angeordnet sein können. Ebene und starre Leiterplatten haben den Vorteil, dass sie im Vergleich zu flexiblen und damit krümmbaren Leiterplatten kostengünstig sind und aufgrund ihrer Eigensteifigkeit auch Vorteile bei ihrer Handhabung bei der Herstellung der Beleuchtungseinrichtung und der Befestigung in der Beleuchtungseinrichtung haben. Die Figur 12 zeigt darüber hinaus eine Vielzahl einzelner Strahlverläufe und eine Hauptabstrahlrichtung 100, die zum Beispiel der Fahrtrichtung entspricht.

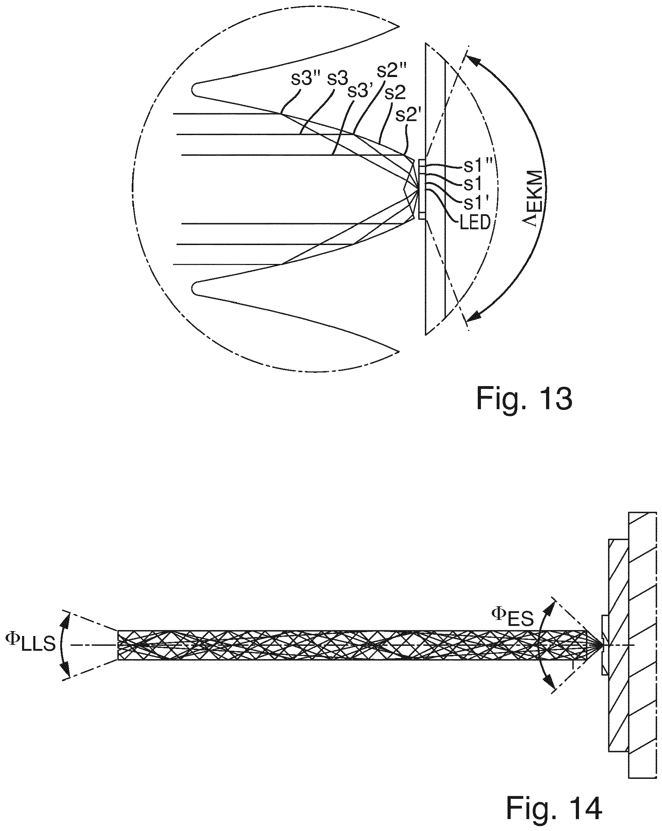

Die Figur 13 zeigt ein Detail U eines Einkoppelzweiges des dritten Ausführungsbeispiels eines Lichtleiters im Meridionalschnitt. Die Lichteintrittsfläche des Einkoppelzweiges dieses Lichtleiters ist hier in zwei Teileintrittsflächen aufgeteilt, die in der Sagittalschnittebene einen stumpfen Winkel miteinander einschließen. Alternativ dazu ist die Lichteintrittsfläche eine konkav gekrümmte, bevorzugt eine mit konstanter Krümmung gekrümmte Fläche.

Der Einkoppelzweig zeichnet sich ferner dadurch aus, dass er sich im Meridionalschnitt mit zunehmender Entfernung von der Lichteintrittsfläche monoton zunehmend aufweitet. Als Folge der Aufweitung verringert sich der Öffnungswinkel des Lichtbündels in der Meridionalebene durch an den Seiten auftretende interne Totalreflexionen. Durch die beschriebene Aufteilung der Lichteintrittsfläche und/oder konkave Gestalt der Lichteintrittsfläche wird das eintretende Licht verstärkt auf die seitlichen Reflektorflächen gelenkt. Als Folge ergibt sich praktisch kein unkollimiertes Direktlicht, also kein Licht, das nicht wenigstens eine parallelisierende interne Totalreflexion an wenigstens einer der beiden seitlichen Reflektorflächen erfährt. Es gilt:

$$\sum_{i=1}^{n} s_i \times n_i = \text{konstant}$$ für alle optischen Wege,

wobei $n_i$ die Brechungsindices der verschiedenen durchlaufenen Medien und $s_i$ die in den verschiedenen Medien durchlaufenen Wege sind. Exemplarisch sind die Wege S, S' und S'' dargestellt. Der Winkel $A_{EKM}$ ist der Öffnungswinkel des aus der Lichtquelle austretenden Lichtbündels. Der stumpfe Winkel zwischen den beiden genannten Lichteintrittsflächen ist bevorzugt genauso groß wie dieser Öffnungswinkel $A_{EKM}$.

Die Figur 14 zeigt einen Sagittalschnitt XIV-XIV des Details U eines Einkoppelzweiges des dritten Ausführungsbeispiels eines Lichtleiters. Die Lichtquelle ist auf einem Schaltungsträger angeordnet, der seinerseits in einem thermischen Kontakt auf dem Kühlkörper angeordnet ist. Dies gilt bevorzugt für sämtliche in dieser Anmeldung angegebenen Ausführungsbeispiele. Das eingekoppelte Licht wird über die weitgehend äquidistanten Transportflächen des Lichtleiters, der also weitgehend eine konstante Dicke oder Wandstärke besitzt, mit einfacher oder mehrfacher interner Totalreflexion weitergeleitet. Das von der Lichtquelle ausgehende Lichtbündel wird dann auf die zugehörige Zone der Lichtaustrittsfläche gebündelt.

Der Öffnungswinkel $\Phi_{LLS}$ im Lichtleiter ist um $1/n_{LL}$ kleiner als der Öffnungswinkel $\Phi_{ES}$ des von der Halbleiterlichtquelle in Luft ausgehenden Lichtbündels. Öffnungswinkel $\Phi_{ES}$ des eintretenden Lichtbündels entsprechend dem Öffnungsverhältnis $V = S_{ES}/S_{AS}$ reduziert werden. $S_{ES}$ ist dabei die Lichtleiterdicke außerhalb der in der Nachbarschaft zur Lichtaustrittsfläche 44 liegenden Querschnittserweiterung, und $S_{AS}$ ist dabei die maximale Lichtleiterdicke, die im Bereich der Querschnittserweiterung auftritt.

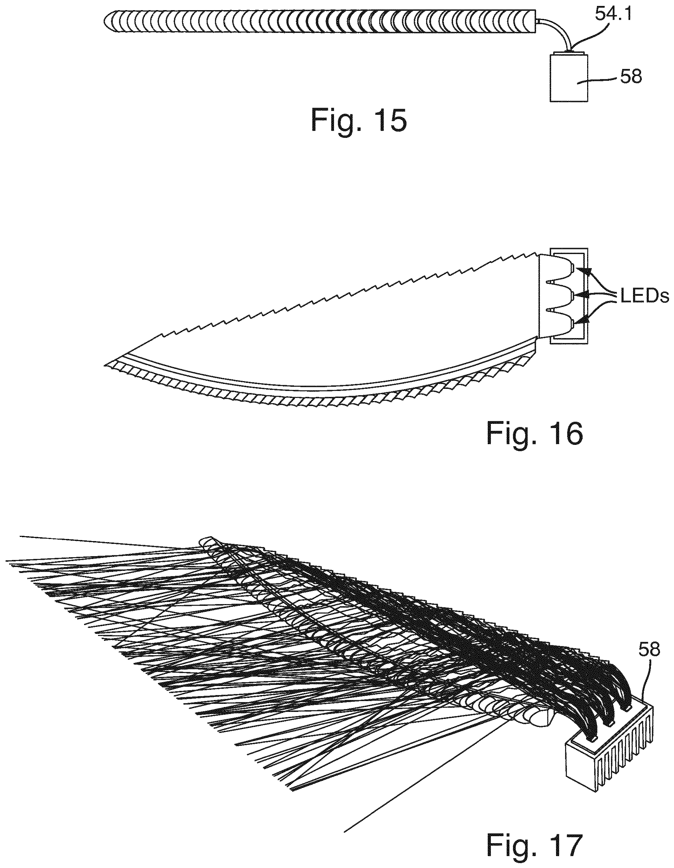

Die Figur 15 zeigt ein viertes Ausführungsbeispiel eines erfindungsgemäßen Lichtleiters mit einer dem Betrachter zugewandten Lichtaustrittsfläche. Die Figur 16 zeigt das vierte Ausführungsbeispiel in einer Draufsicht auf eine Meridionalebene, und die Figur 17 zeigt das vierte Ausführungsbeispiel in einer perspektivischen Ansicht. Das vierte Ausführungsbeispiel zeichnet sich dadurch aus, dass der Lichtleiter Einkoppelzweige aufweist, die in der Sagittalfläche gebogen sind und deren Lichteintrittsflächen alle auf ein und derselben Ebene liegen, so dass die zugehörigen Lichtquellen auf einer starren und ebenen Leiterplatte angeordnet werden können. Die Biegung ergibt sich durch eine im Sagittalschnitt gekrümmt verlaufende Meridionalfläche.

Im Übrigen weisen die Einkoppelzweige des vierten Ausführungsbeispiels die gleichen Merkmale auf wie die Einkoppelzweige des dritten Ausführungsbeispiels. Durch die gebogene Gestalt der Einkoppelzweige ergeben sich auch hier wie bereits bei dem in den Figuren 7 bis 9 dargestellten Ausführungsbeispiel weitere Freiheitsgrade für die Platzierung der Lichtquellen und des Kühlkörpers, was eine Anpassung an gegebenenfalls vorliegende Bauraumbeschränkungen erlaubt.

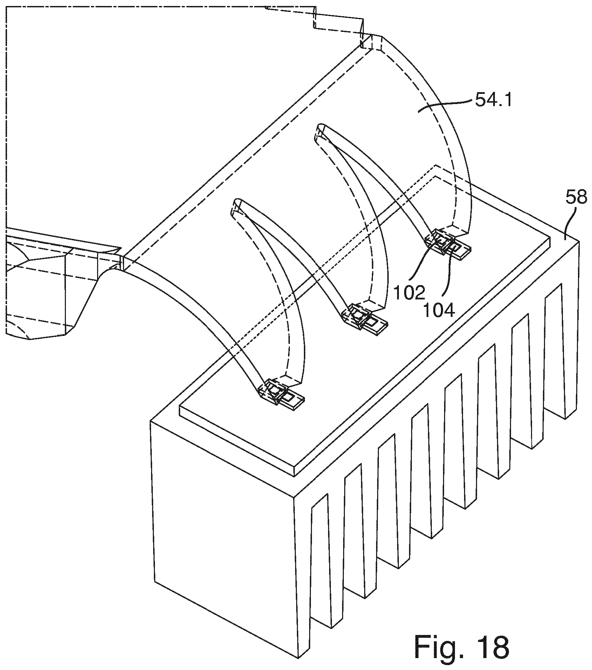

Die Figur 18 zeigt eine vergrößerte Darstellung der Lichteinkoppelzweige mit Lichtquellen und Kühlkörper 58 des vierten Ausführungsbeispiels. Die Figur 18 zeigt insbesondere die Möglichkeit, dass jede Eintrittsfläche auch mit Licht von mehr als einer Lichtquelle 102, 104 gespeist werden kann. Beim Beispiel der Figur 18 wird jeder Einkoppelzweig 54.i von einem Paar von Lichtquellen 102, 104 aus einer in der Figur 18 mehr rechts liegenden Halbleiterlichtquelle 104 und einer mehr links liegenden Halbleiterlichtquelle 102 gespeist. In der Figur 18 sind die weiter rechts liegenden Lichtquellen zum Beispiel weißes Licht emittierende Halbleiterlichtquellen und die weiter links liegenden Lichtquellen sind zum Beispiel gelbes Licht emittierende Halbleiterlichtquellen. Die Lichtquellen eines Paares sind bevorzugt im Sagittalschnitt nebeneinander angeordnet. Sie sind ferner bevorzugt in der Brennlinie des jeweiligen kollimierenden Einkoppelzweiges und in der Meridionalfläche angeordnet. Mit den verschiedenfarbiges Licht emittierenden Halbleiterlichtquellen lassen sich mit einem Lichtleiter mehrere Lichtfunktionen bei nahezu identischem Erscheinungsbild erfüllen. Mit der angegebenen Kombination weiß/gelb lassen sich zum Beispiel eine Tagfahrlichtfunktion mit dem weißen Licht und eine Blinklichtfunktion mit dem gelben Licht erfüllen.

Der in den verschiedenen Ausführungsbeispielen jeweils gleiche, plattenförmige Teil des Lichtleiters mit der gegebenenfalls im Vergleich zur Wandstärke der Platte vergrößerten Querschnitt der Lichtaustrittsfläche lässt sich im Sagittalschnitt sehr gut biegen, so dass sich im Raum gekrümmte Meridionalflächen und Lichtaustrittsflächen ergeben, ohne dass sich die erwünschten Eigenschaften, wie die Möglichkeit ein homogen helles Erscheinungsbild oder einen wischenden Lichteffekt zu erzeugen, beeinträchtigt werden. Daraus resultiert der große Vorteil, dass sich die Lichtaustrittsfläche in ihrem räumlichen Verlauf in weiten Grenzen variieren und an unterschiedlichste Konturen anpassen lässt.

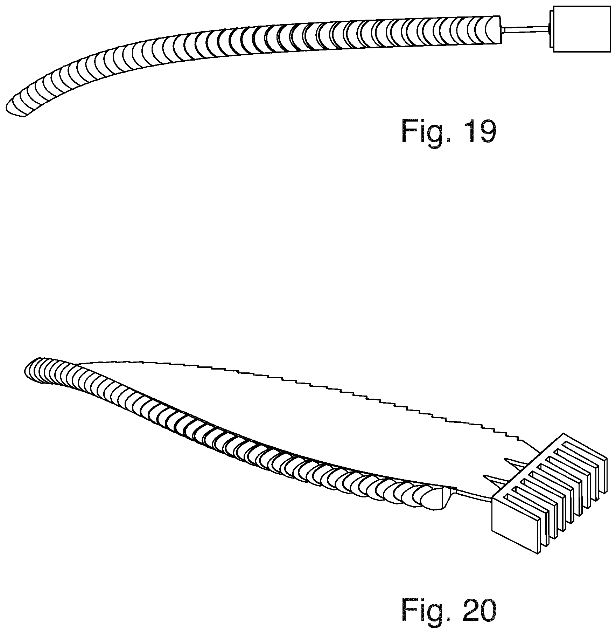

Die Figuren 19 und 20 veranschaulichen diesen Sachverhalt durch die Darstellung eines fünften Ausführungsbeispiels, dass sich durch einen im Sagittalschnitt gekrümmten Verlauf der Meridionalfläche und der Lichtaustrittsfläche auszeichnet. Dabei zeigt die Figur 19 das Erscheinungsbild der Lichtaustrittsfläche, wie es sich für einen Betrachter ergibt, der sich in der Hauptabstrahlrichtung vor dem Lichtleiter befindet. Die Figur 20 zeigt den Lichtleiter aus der Figur 19 in einer perspektivischen Ansicht.

Für sämtliche Ausführungsbeispiele gilt, dass der Lichtleiter bevorzugt als einstückiger und transparenter Festköper verwirklicht ist. In sämtlichen Ausführungsbeispielen stellen sich im Meridionalschnitt gerichtete Strahlengänge ein. Das von den Lichtquellen ausgehende Licht trifft durch die Einkoppelfläche des Kollimators, beziehungsweise des Einkoppelzweiges, in den Lichtleiter ein und wird unter flachem Winkel auf Kollimatorflächen gelenkt, an denen die Strahlen umlenkend reflektiert werden. Von dort gelangt das Licht auf Sektoren der Umlenkfläche, wo das Licht durch Reflexion zu nebeneinander liegenden Zonen der Lichtaustrittsfläche umgelenkt wird. An den Zonen der Lichtaustrittsfläche werden die Strahlen ein letztes Mal gebrochen und dabei gegebenenfalls noch in eine erwünschte Abstrahlrichtung umgelenkt. Zu diesem Zweck ist die Lichtaustrittsfläche bevorzugt in Stufen oder Facetten unterteilt, so dass die Flächennormalen, mit denen die Abstrahlrichtungen festgelegt werden, unabhängig von einer Pfeilung der ungestuften Lichtaustrittsfläche frei gewählt werden können.

Die Eintrittsflächen, die kollimierenden Flächen der Einkoppelzweige und die Umlenkfläche stehen bevorzugt senkrecht auf den Transportflächen, die den Sagittalschnitt des Lichtleiters begrenzen und die mit Ausnahme einer im Auskoppelbereich auftretenden Querschnittserweiterung im weitgehend äquidistant sind. Die Eintrittsflächen, die kollimierenden Flächen der Einkoppelzweige, die Umlenkfläche und die Lichtaustrittsausflächen können jeweils einzeln oder in Kombination miteinander im Meridionalschnitt optional leicht konvex oder leicht konkav gekrümmt sein, um die Bündelöffnungswinkel aneinander anzugleichen, die für eine gewünschte Lichtverteilung erforderliche Streubreite zu erzielen oder um eine homogenere Ausleuchtung der Lichtaustrittsfläche zu erzielen.

**Patentansprüche**

1.  Lichtleiter (30) für eine Kraftfahrzeugbeleuchtungseinrichtung (28), welcher Lichtleiter (30) wenigstens zwei Lichteintrittsflächen (42.1, 42.2, 42.n) und eine Lichtaustrittsfläche (44) aufweist und dazu eingerichtet ist, mit über eine erste (42.1) der wenigstens zwei Lichteintrittsflächen (42.1,42.2,42.n) eingekoppeltem Licht eine erste Zone der Lichtaustrittsfläche (44) zu beleuchten und mit über eine zweite (42.2) der wenigstens zwei Lichteintrittsflächen (42.1,42.2,42.n) eingekoppeltem Licht eine zweite, nicht mit der ersten Zone identische zweite Zone der Lichtaustrittsfläche (44) zu beleuchten, wobei der Lichtleiter (30) eine der Lichtaustrittsfläche (44) gegenüberliegende Umlenkfläche (46) aufweist, die wenigstens einen ersten Sektor (56.1) und einen zweiten Sektor (56.2) aufweist, und wobei der Lichtleiter (30) dazu eingerichtet ist, über die erste Lichteintrittsfläche (42.1) eingekoppeltes Licht auf den ersten Sektor (56.1)zu richten, und wobei der erste Sektor (56.1) dazu eingerichtet ist, das auf ihn gerichtete Licht auf die erste Zone zu richten, und wobei der zweite Sektor (56.2) dazu eingerichtet ist, das auf ihn gerichtete Licht auf die zweite Zone zu richten, und wobei der erste Sektor (56.1) nicht mit dem zweiten Sektor (56.2) identisch ist, **dadurch gekennzeichnet, dass** der Lichtleiter (30)zwei einander gegenüberliegende und zwischen der Lichtaustrittsfläche (44) und der Umlenkfläche (46) liegende Transportflächen (38, 40) sowie ein sowohl an die Lichtaustrittsfläche (44) und die Umlenkfläche (46) als auch an beide Transportflächen anstoßendes erstes Ende (52) aufweist und dass das erste Ende (52) mehrere als Kollimatoren ausgestaltete Einkoppelzweige (54.1, 54.2, 54.n) aufweist, und dass die Lichteintrittsflächen (42.1,42.2, 42.n) des Lichtleiters (30) Einkoppelflächen von den Einkoppelzweigen (54.1, 54.2, 54.n) sind, wobei das von den Lichtquellen ausgehende Licht durch die Einkoppelflächen (54.1, 54.2, 54.n)der Kollimatoren bzw. der Einkoppelzweige in den Lichtleiter (30) eintritt und unter flachem Winkel auf Kollimatorflächen gelenkt wird, an denen die Strahlen umlenkend reflektiert werden und wobei das Licht von dort auf Sektoren (56.1,56.2,56.n)der Umlenkfläche (46) gelangt, wo das Licht durch Reflexion zu nebeneinander liegenden Zonen der Lichtaustrittsfläche (44)umgelenkt wird.

2. Lichtleiter (30) nach Anspruch 1, **dadurch gekennzeichnet, dass** die Umlenkfläche (46) durch eingeformte Auskoppelelemente wie Prismen dazu eingerichtet ist, das auf einen bestimmten Sektor (56.i) konzentrierte Licht auf genau eine durch den Strahlengang zugeordnete Zone der Lichtaustrittsfläche (44) zu konzentrieren.

3. Lichtleiter (30) nach einem der vorhergehenden Ansprüche, **dadurch gekennzeichnet, dass** die Lichtaustrittsfläche (44) in Facetten (60) unterteilt ist, von denen bevorzugt mehrere in eine Zone der Lichtaustrittsfläche liegen.

4. Lichtleiter (30) nach Anspruch 3, **dadurch gekennzeichnet, dass** die Facetten im Meridionalschnitt leicht konvex oder konkav ausgeführt sind, um die für eine regelkonforme Lichtverteilung erforderliche Streubreite zusammen mit einem homogenen Erscheinungsbild der Lichtaustrittsfläche zu gewährleisten.

5. Lichtleiter (30) nach Anspruch 3 oder 4, **dadurch gekennzeichnet, dass** die einzelnen Facetten bevorzugt gestuft so angeordnet sind, dass sich unabhängig von der Pfeilung der Einhüllenden der Lichtaustrittsfläche eine erwünschte Abstrahlrichtung ergibt.

6. Lichtleiter (30) nach einem der Ansprüche 3 bis 5, **dadurch gekennzeichnet, dass** die Facetten darüber hinaus im Sagittalschnitt als konvexe Sattelflächen oder konkave Torusflächen ausgeführt sind.

7. Lichtleiter (30) nach einem der vorhergehenden Ansprüche, **dadurch gekennzeichnet, dass** die Umlenkprismen so ausgestaltet und angeordnet sind, dass sie das einfallende Licht so umlenken, dass das umgelenkte Licht die Lichtaustrittsfläche in einem Normalbetrieb, in dem keine wischenden Lichteffekte erzeugt werden, homogen beleuchtet.

8. Lichtleiter (30) nach einem der vorhergehenden Ansprüche, **dadurch gekennzeichnet, dass** die Umlenkprismen insbesondere so ausgestaltet und angeordnet sind, dass jeder Sektor der Umlenkflächen die von ihm bevorzugt beleuchtete Zone der Lichtaustrittsfläche homogen beleuchtet.

9. Lichtleiter (30) nach einem der vorhergehenden Ansprüche, **dadurch gekennzeichnet, dass** die Lichteinkoppelzweige (54.i) in einer Sagittalfläche gebogen sind.

10. Lichtleiter (30) nach einem der vorhergehenden Ansprüche, **dadurch gekennzeichnet, dass** die Meridionalfläche der Einkoppelzweige (54.i) eben und nicht gekrümmt ist und in eine zumindest im Übergangsbereich in der gleichen Meridionalebene liegenden Rest des Lichtleiters übergeht.

11. Lichtleiter (30) nach einem der vorhergehenden Ansprüche, **dadurch gekennzeichnet, dass** sich der Einkoppelzweig (54.i) im Meridionalschnitt mit zunehmender Entfernung von der Lichteintrittsfläche monoton zunehmend aufweitet.

12. Lichtleiter (30) nach einem der vorhergehenden Ansprüche, **dadurch gekennzeichnet, dass** der Lichtleiter Einkoppelzweige (54.i) aufweist, die in der Sagittalfläche gebogen sind und deren Lichteintrittsflächen alle auf ein und derselben Ebene liegen.

13. Lichtleiter (30) nach einem der vorhergehenden Ansprüche, **dadurch gekennzeichnet, dass** der Lichtleiter eine Querschnittserweiterung aufweist, die von seiner Lichtaustrittsfläche (44) begrenzt und auf eine Nachbarschaft zu der Lichtaustrittsfläche begrenzt ist, wobei die Querschnittserweiterung so beschaffen ist, dass sich im Querschnitt die Form einer zylindersektorförmigen Linse ergibt, die das austretende Licht im Sagittalschnitt bündelt und an den Lichtleiter angeformt ist, so dass sie einen Bestandteil eines einstückigen Lichtleiters bildet, oder dass die Linse und der Rest des Lichtleiters die Bestandteile eines zweiteiligen aus dem Rest des Lichtleiters und der Linse zusammengesetzten Lichtleiters bilden.

**Claims**

1. Light guide (30) for a motor vehicle lighting device (28), which light guide (30) has at least two light entry surfaces (42.1, 42.2, 42.n) and a light exit surface (44) and is adapted to illuminate a first zone of the light exit surface (44) with light coupled in via a first one (42.1) of the at least two light entry surfaces (42.1, 42.2, 42.n) and to illuminate a second zone of the light exit surface (44), which is not identical to the first zone, with light coupled in via a second (42.2) of the at least two light entry surfaces (42.1, 42.2, 42.n), wherein the light guide (30) has a deflecting surface (46) opposite the light exit surface (44), which deflecting surface (46) has at least a first sector (56.1) and a second sector (56.2), and wherein the light guide (30) is adapted to direct light coupled in via the first light entry surface (42.1) onto the first sector (56.1), and wherein the first sector (56.1) is adapted to direct the light that is directed thereon on the first zone, and wherein the second sector (56.2) is adapted to direct light that is directed thereon, on the second zone, and wherein the first sector (56.1) is not identical to the second sector (56.2), **characterized in that** the light guide (30) has two transport surfaces (38, 40) opposite one another and lying between the light exit surface (44) and the deflection surface (46), and a first end (52) abutting both the light exit surface (44) and the deflection surface (46) and both transport surfaces, and **in that** the first end (52) has a plurality of input branches (54.1, 54.2, 54.n) designed as collimators, and that the light entry surfaces (42.1, 42.2, 42.n) of the light guide (30) are input surfaces of the input branches (54.1, 54.2, 54.n), wherein the light emanating from the light sources passes through the input surfaces (54.1, 54.2, 54.n) of the collimators or of the input branches into the light guide (30), and is deflected at a flat angle onto collimator surfaces at which the rays are reflected in a deflecting manner, and wherein the light from there reaches sectors (56.1, 56.2, 56.n) of the deflecting surface (46) where the light is deflected by reflection to adjacent zones of the light exit surface (44).

2. Light guide (30) according to claim 1, **characterised in that** the deflecting surface (46) is adapted by moulded-outcoupling elements such as prisms to concentrate the light concentrated on a specific sector (56.i) preferably on exactly one zone of the light-exit surface (44) assigned by the beam path.

3. Light guide (30) according to one of the preceding claims, **characterized in that** the light exit surface (44) is divided into facets (60), of which preferably several are located in a zone of the light exit surface.

4. Light guide (30) according to claim 3, **characterized in that** the facets are slightly convex or concave in meridional section in order to ensure the scattering width required for a light distribution in conformity with the rules together with a homogeneous appearance of the light exit surface.

5. Light guide (30) according to claim 3 or 4, **characterised in that** the individual facets are preferably arranged in a stepped manner so that a desired direction of radiation is obtained independently of the sweep of the envelope of the light-emitting surface.

6. Light guide (30) according to one of claims 3 to 5, **characterized in that** the facets are further designed in sagittal section as convex saddle surfaces or concave torus surfaces.

7. Light guide (30) according to one of the preceding claims, **characterized in that** the deflecting prisms are designed and arranged in such a way that they deflect the incident light in such a way that the deflected light homogeneously illuminates the light exit surface in a normal operation in which no wiping light effects are produced.

8. Light guide (30) according to one of the preceding claims, **characterized in that** the deflecting prisms are in particular designed and arranged in such a way that each sector of the deflecting surfaces homogeneously illuminates the zone of the light exit surface which it preferentially illuminates.

9. Light guide (30) according to one of the preceding claims, **characterized in that** the light input branches (54.i) are bent in a sagittal surface.

10. Light guide (30) according to one of the preceding claims, **characterised in that** the meridional surface of the input branches (54.i) is flat and not curved and merges into a remainder of the light guide lying in the same meridional plane at least in the transition region.

**11.** Light guide (30) according to one of the preceding claims, **characterized in that** the input coupling branch (54.i) expands monotonically and increasingly in the meridional section with increasing distance from the light input surface.

**12.** Light guide (30) according to one of the preceding claims, **characterized in that** the light guide has input branches (54.i) which are bent in the sagittal plane and whose light entry surfaces all lie in one and the same plane.

**13.** Light guide (30) according to one of the preceding claims, **characterized in that** the light guide has a cross-sectional enlargement which is bounded by its light exit surface (44) and is limited to a vicinity of the light exit surface, the cross-sectional enlargement being such that the shape of a cylindrical sector-shaped lens results, which concentrates the emanating light in sagittal section and is moulded to the light guide so that it forms part of a one-piece light guide, or that the lens and the rest of the light guide form the components of a two-piece light guide composed of the rest of the light guide and the lens.

**Revendications**

**1.** Conducteur de lumière (30) pour dispositif d'éclairage de véhicule automobile (28), lequel conducteur de lumière (30) présente au moins deux surfaces d'entrée de lumière (42.1, 42.2, 42.n) et une surface de sortie de lumière (44) et est agencé pour éclairer, par de la lumière injectée par le biais d'une première (42.1) des surfaces d'entrée de lumière (42.1, 42.2, 42.n), au moins au nombre de deux, une première zone de la surface de sortie de lumière (44) et pour éclairer, par de la lumière injectée par le biais d'une deuxième (42.2) des surfaces d'entrée de lumière (42.1, 42.2, 42.n), au moins au nombre de deux, une deuxième zone, non identique à la première zone, de la surface de sortie de lumière (44), le conducteur de lumière (30) présentant une surface de renvoi (46) opposée à la surface de sortie de lumière (44) et qui présente au moins un premier secteur (56.1) et un deuxième secteur (56.2), et le conducteur de lumière (30) étant agencé pour diriger la lumière incidente par le biais de la première surface d'entrée de lumière (42.1) sur le premier secteur (56.1), et le premier secteur (56.1) étant agencé pour diriger la lumière dirigée sur celui-ci sur la première zone, et le deuxième secteur (56.2) étant agencé pour diriger la lumière dirigée sur celui-ci sur la deuxième zone, le premier secteur (56.1) n'étant pas identique au deuxième secteur (56.2), **caractérisé en ce que** le conducteur de lumière (30) présente deux surfaces de transport (38, 40) situées l'une en face de l'autre et entre la surface de sortie de lumière (44) et la surface de renvoi (46), ainsi qu'une première extrémité (52) aboutissant aussi bien contre la surface de sortie de lumière (44) et la surface de renvoi (46) que contre les deux surfaces de transport, **en ce que** la première extrémité (52) présente plusieurs branches d'injection (54.1, 54.2, 54.n) configurées en tant que collimateurs, et **en ce que** les surfaces d'entrée de lumière (42.1, 42.2, 42.n) du conducteur de lumière (30) sont des surfaces d'injection des branches d'injection (54.1, 54.2, 54.n), la lumière partant des sources de lumière pénétrant par les surfaces d'injection (54.1, 54.2, 54.n) des collimateurs ou les branches d'injection dans le conducteur de lumière (30) et étant dirigée à angle plat sur des surfaces de collimateur, au niveau desquelles les faisceaux sont reflétés par renvoi et la lumière parvenant de là sur des secteurs (56.1, 56.2, 56.n) de la surface de renvoi (46), où la lumière est déviée par réflexion vers des zones de la surface de sortie de lumière (44) situées l'une à côté de l'autre.

**2.** Conducteur de lumière (30) selon la revendication 1, **caractérisé en ce que** la surface de renvoi (46) est agencée par des éléments d'éjection moulés comme des prismes pour concentrer la lumière concentrée sur un secteur déterminé (56.i) sur exactement une zone de la surface de sortie de lumière (44) associée par le trajet du faisceau.

**3.** Conducteur de lumière (30) selon l'une des revendications précédentes, **caractérisé en ce que** la surface de sortie de lumière (44) est subdivisée en facettes (60), parmi lesquelles de préférence plusieurs se trouvent dans une zone de la surface de sortie de lumière.

**4.** Conducteur de lumière (30) selon la revendication 3, **caractérisé en ce que** les facettes sont réalisées dans la coupe méridionale de manière légèrement convexe ou concave afin de garantir la largeur de dispersion nécessaire à une distribution de la lumière conforme aux règles conjointement avec un aspect homogène de la surface de sortie de lumière.

**5.** Conducteur de lumière (30) selon la revendication 3 ou 4, **caractérisé en ce que** les facettes individuelles sont agencées de préférence de manière étagée de façon à obtenir une direction de rayonnement souhaitée indépendamment de l'angle de flèche des enveloppes de la surface de sortie de lumière.

**6.** Conducteur de lumière (30) selon l'une des revendications 3 à 5, **caractérisé en ce que** les facettes sont réalisées en outre dans la coupe sagittale en tant que surfaces convexes en forme de col ou surfaces toriques concaves.

**7.** Conducteur de lumière (30) selon l'une des revendications précédentes, **caractérisé en ce que** les prismes de renvoi sont configurés et agencés de sorte qu'ils renvoient la lumière incidente de façon telle que la lumière renvoyée éclaire de manière homogène la surface de sortie de lumière dans un mode normal, dans lequel aucun effet de lumière d'essuyage n'est généré.

8. Conducteur de lumière (30) selon l'une des revendications précédentes, **caractérisé en ce que** les prismes de renvoi sont configurés et agencés en particulier de façon telle que chaque secteur des surfaces de renvoi éclaire de manière homogène la zone de la surface de sortie de lumière de préférence éclairée par celui-ci.

9. Conducteur de lumière (30) selon l'une des revendications précédentes, **caractérisé en ce que** les branches d'injection de lumière (54.i) sont incurvées en une surface sagittale.

10. Conducteur de lumière (30) selon l'une des revendications précédentes, **caractérisé en ce que** la surface méridionale des branches d'injection (54.i) est plane et non courbée, et se continue dans un reste du conducteur de lumière situé au moins dans la zone de transition dans le même plan méridional.

11. Conducteur de lumière (30) selon l'une des revendications précédentes, **caractérisé en ce que** la branche d'injection (54.i), dans la coupe méridionale, s'évase progressivement et de manière monotone lorsque l'on s'éloigne de la surface d'entrée de lumière.

12. Conducteur de lumière (30) selon l'une quelconque des revendications précédentes, **caractérisé en ce que** le conducteur de lumière présente des branches d'injection (54.i), qui sont incurvées dans la surface sagittale et dont les surfaces d'entrée de lumière se trouvent toutes sur un seul et même plan.

13. Conducteur de lumière (30) selon l'une des revendications précédentes, **caractérisé en ce que** le conducteur de lumière présente un élargissement de section transversale, qui est limité par sa surface de sortie de lumière (44) et est limité sur un voisinage par rapport à la surface de sortie de lumière, l'élargissement de section transversale étant tel que la section transversale prend la forme d'une lentille en forme de secteur cylindrique, qui regroupe la lumière sortant dans la coupe sagittale et est façonnée sur le conducteur de lumière de sorte qu'elle forme un élément constitutif d'un conducteur de lumière d'un seul tenant ou que la lentille et le reste du conducteur de lumière forment les élément constitutifs d'un conducteur de lumière à deux parties composé du reste du conducteur de lumière et de la lentille.

Fig. 1

Fig. 2

Fig. 3

Detail "X"

Fig. 4

Detail "Y"

Fig. 5

Fig. 6

16

58

54.i

## Fig. 7

30

58

54.i

## Fig. 8

30

58

54.i

30

## Fig. 9

Fig. 10

Fig. 11

Fig. 12

Fig. 13

Fig. 14

54.1

58

## Fig. 15

LEDs

## Fig. 16

58

## Fig. 17

Fig. 18

Fig. 19

Fig. 20

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1895228 A1
- US 5590945 A

- DE 102011018508